(19) Europäisches Patentamt
European Patent Office
Office européen des brevets

(11) **EP 3 913 038 B1**

(12) **FASCICULE DE BREVET EUROPEEN**

(45) Date de publication et mention de la délivrance du brevet:
**07.06.2023 Bulletin 2023/23**

(21) Numéro de dépôt: **21174002.2**

(22) Date de dépôt: **17.05.2021**

(51) Classification Internationale des Brevets (IPC):
**C10L 5/44** (2006.01)

(52) Classification Coopérative des Brevets (CPC):
**C10L 5/361; C10L 5/363; C10L 5/442;**
C10L 2250/06; C10L 2290/06; C10L 2290/08;
C10L 2290/148; C10L 2290/60; Y02E 50/10;
Y02E 50/30

(54) **PROCÉDÉ DE FABRICATION DE PELLETS OU DE BRIQUETTES DE COMBUSTIBLE À PARTIR DE BOIS-DÉCHET**

VERFAHREN ZUR HERSTELLUNG VON PELLETS ODER BRENNSTOFFBRIKETTS AUS HOLZABFÄLLEN

METHOD FOR MANUFACTURING PELLETS OR FUEL BRIQUETTES FROM WASTE WOOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.05.2020 FR 2004951**

(43) Date de publication de la demande:
**24.11.2021 Bulletin 2021/47**

(73) Titulaire: **Electricité de France**
**75008 Paris (FR)**

(72) Inventeurs:
• **SALAUN, Julien**
**92500 RUEIL MALMAISON (FR)**
• **LE BEVILLON, Philippe**
**44260 SAVENAY (FR)**
• **FLORENTY, Denis**
**46090 LABASTIDE-MARNHAC (FR)**

(74) Mandataire: **Regimbeau**
**Parc d'affaires Cap Nord A**
**2, allée Marie Berhaut**
**CS 71104**
**35011 Rennes Cedex (FR)**

(56) Documents cités:
**FR-A1- 3 087 790**

• **PETER BJÖRKLUND ET AL: "Steam exploded pellets for heat and power generation", VGB POWERTECH,, vol. 96, no. 4, 1 janvier 2016 (2016-01-01), pages 52-56, XP001596829, ISSN: 1435-3199**
• **Alireza Kharazipour ET AL: "Recycling of Wood Composites and Solid Wood Products", , 18 mai 2014 (2014-05-18), XP055448902, Extrait de l'Internet: URL:https://www.researchgate.net/profile/Ursula_Kuees-GAUG/publication/262179636_Recycling_of_Wood_Composites_and_Solid_Wood_Products/links/0c9605378d7666743f000000/Recycling-of-Wood-Composites-and-Solid-Wood-Products.pdf [extrait le 2018-02-07]**

## Description

## DOMAINE DE L'INVENTION

La présente invention se situe dans le domaine général du recyclage du bois en vue de son utilisation à titre de combustible écologique.

## ETAT DE LA TECHNIQUE

Dans un contexte de volonté de réduction du bilan carbone, le présent demandeur a engagé des études dès 2015 visant à mettre au point un nouveau type de combustible écologique à base de bois, permettant le maintien en fonctionnement d'installations utilisant actuellement du charbon.

A partir de 2017 puis en 2018, différentes stratégies politiques de l'énergie en France et à l'International (Plan climat de juillet 2017, Stratégie Nationale Bas Carbone (SNBC), Programmation Pluriannuelle de l'Energie (PPE) de novembre 2018), ont clarifié la trajectoire attendue concernant la combustion au charbon et indiquent l'arrêt de la production d'électricité à partir de charbon seul en 2022. Pour pouvoir continuer à exploiter les installations correspondantes au-delà de 2022, il est nécessaire de trouver une alternative au charbon répondant aux exigences environnementales de baisse de l'empreinte $CO_2$. Les premières recherches ont été menées sur le bois naturel.

Pour ne pas déstabiliser la filière bois énergie déjà en place, notamment pour les chaufferies de cogénération de petite puissance et limiter les concurrences d'usage sur une ressource sensible, le présent demandeur s'est intéressé à une ressource encore peu valorisée : le "bois-déchet".

On entend par l'expression « bois-déchet » tous les bois issus de la déconstruction de bâtiments, de la mise au rebut de mobilier, d'emballages, etc., tous des déchets ayant la particularité d'avoir été pollués par des polluants exogènes, c'est à dire par des traitements que le bois a subi avant d'être mis au rebut. Il peut s'agir par exemple de peintures, additifs, colles, etc. On parle de bois de « Classe B » ou de catégorie 3 - Bois Fin de vie et bois-déchets (BFVBD) selon le référentiel de l'ADEME.

Ce bois-déchet présente cependant plusieurs inconvénients majeurs. Tout d'abord, dans la famille des bois de classe B, les matériaux ont généralement subi un traitement industriel (de transformation ou de finition), avec notamment des substances telles que des colles/liants ou des vernis/ peintures. Les peintures peuvent contenir entre autres des liaisons avec le chlore et des liaisons métalliques avec le baryum, cadmium, chrome, cobalt, plomb, cuivre, titane et zinc, etc., substances qu'il convient de traiter avant rejet.

Un deuxième inconvénient est règlementaire. Le bois de type B a le statut de déchet, et donc voué à l'incinération (en France notamment). Ceci implique pour l'utilisateur des moyens de dépollution et/ou contraintes techniques complémentaires et un suivi renforcé par rapport à une installation de combustion (au sens ICPE (Installations Classées pour la Protection de l'Environnement)).

Par ailleurs, on connait depuis longtemps le procédé connu sous l'anglicisme « Steam Explosion » pour « Vapeur Explosion » qui met en oeuvre deux étapes successives : le vapocraquage et la décompression explosive.

Le vapocraquage consiste à faire pénétrer de la vapeur dans le matériau sous haute pression par diffusion à l'intérieur de sa structure et induire une transformation de certaines chaînes carbonées en d'autres molécules.

La décompression explosive consiste à produire une chute brutale de pression qui entraine la re-vaporisation d'une partie de l'eau de condensation présente dans le matériau. Cette expansion brutale de la vapeur d'eau induit l'apparition de forces de cisaillement qui sont appliquées à l'ensemble du matériau qui engendrent l'éclatement mécanique de la structure de ce dernier.

Une illustration de ce qui précède est donnée par exemple dans le document FR 3087790, ainsi que dans les articles « PETER BJORKLUND et Al: "Steam exploded pellets for heat and power generation", VGB POWERTECN vol.96,no.4 » et « Alireza Kharazipour Et Al:"Recycling ofWood Composites and Solid Wood Products".

La présente invention a pour but de perfectionner cette technique pour l'adapter au traitement de bois pollué, de manière à pouvoir obtenir, au final, des pellets ou des briquettes utilisables dans les mêmes conditions que s'il s'agissait de bois naturel sein, c'est à dire non pollué.

Par le terme « pellet(s) », on entend des pastilles, des bâtonnets ou des granulés.

## EXPOSE DE L'INVENTION

A cet effet, l'invention propose un procédé de fabrication de pellets ou de briquettes de combustible à partir de bois, selon lequel :

- on soumet des fragments de ce bois à un premier traitement dans une enceinte, par injection de vapeur comprise entre 200 et 300 °C et montée en pression jusqu'à 10 à 30 bar,
- puis à un second traitement de décompression explosive par baisse brutale de ladite pression de manière à provoquer l'éclatement desdits fragments ;
- on récupère lesdits fragments et on transforme ceux-ci en pellets ou briquettes, après une étape de séchage préalable,

caractérisé en ce que lesdits fragments de bois sont des fragments de bois comportant au moins un polluant exogène, que l'on détermine la nature et la proportion dudit au moins un polluant avant la mise en oeuvre de ledit premier traitement et que l'on adapte la durée de ce premier traitement en fonction de la nature du polluant majoritaire.

Grâce à ces caractéristiques de l'invention, on parvient à débarrasser au mieux le bois dudit polluant tout en consommant le moins d'énergie possible, de sorte que ce bois peut être assimilé à de la biomasse et être utilisé comme combustible, tout particulièrement en remplacement du charbon, par exemple pour la production d'énergie électrique ou de vapeur.

Selon d'autres caractéristiques avantageuses et non limitatives de ce procédé, prises seules ou selon une combinaison quelconque d'au moins deux d'entre elles :

- il est mis en oeuvre avec un facteur de sévérité S inférieur à 4,5,
Avec

$$ S = Log_{10} \int_0^t e^{\left[\frac{Tr-Tb}{14,75}\right]} . dt $$

où

Tr= Température mise en oeuvre (°C) ;
Tb= Température d'ébullition de l'eau à pression atmosphérique (°C) ;
t = Temps de rétention (minutes) ;
14,75= Valeur d'énergie d'activation dans les conditions où la cinétique du procédé est d'ordre 1 et obéit à la loi d'Arrhenius ;

- la granulométrie des fragments de bois est comprise entre 0,1 et 50 millimètres ;

- la baisse brutale de pression est opérée en une durée inférieure à 10 secondes ;

- la baisse brutale de pression est opérée selon une amplitude d'au moins 10 bar ;

- lorsque le polluant majoritaire est à base de polychlorobiphényles (PCB), alors la durée du premier traitement est de 5 minutes ;

- lorsque le polluant majoritaire est à base d'azote, alors la durée du premier traitement est de 5 minutes ;

- lorsque le polluant majoritaire est à base de soufre, alors la durée du premier traitement est de 5 minutes ;

- lorsque le polluant majoritaire est à base de chlore, alors la durée du premier traitement est de 15 minutes ;

- l'on collecte les effluents liquides et gazeux qui ont été générés en vue de leur traitement.

## DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

La figure 1 est un schéma représentant les principales étapes de mise en oeuvre du procédé selon l'invention ;

La figure 2 est un schéma représentant les différents éléments d'une installation pour la réalisation de ce procédé ;

La figure 3 est un schéma représentant les principales étapes d'un processus plus général, incluant la mise en oeuvre du procédé selon l'invention.

## DESCRIPTION DETAILLEE DE L'INVENTION

De manière générale, le bois est un composite de polymères naturels. Il est possible d'y distinguer deux grands groupes de constituants :

- les substances macromoléculaires (cellulose, hémicellulose, et lignines), représentant environ 98% du matériau,

- les substances de faibles poids moléculaires notamment constituées des extraits et substances minérales. Elles représentent environ 2% du matériau.

La cellulose et les hémicelluloses sont des polysaccharides composés de sucres fermentescibles. La lignine est un polymère phénolique. La cellulose et les hémicelluloses forment les armatures du bois et la lignine assure le rôle de liant.

Comme indiqué plus haut, la « Vapeur Explosion » est un procédé comprenant deux étapes successives, à savoir le vapocraquage et la décompression explosive.

- le vapocraquage consiste à faire pénétrer la vapeur dans le matériau sous haute pression par diffusion à l'intérieur de sa structure.

- la décompression explosive consiste à produire une chute brutale de pression qui entraine la « revaporisation » d'une partie de l'eau présente dans le matériau. Cette expansion brutale de la vapeur d'eau induit l'apparition de forces de cisaillement qui sont appliquées à l'ensemble du matériau et qui engendrent l'éclatement mécanique de la structure de ce dernier.

Les capacités de lixiviation (technique d'extraction de produits solubles par un solvant, notamment par l'eau) du procédé précité sont peu, voire pas exploitées, car ce procédé est principalement utilisé en pré-traitement d'un procédé de bio-raffinage, ciblant principalement la cellulose et hémicellulose, emprisonnée dans la lignine. Le procédé de Vapeur Explosion agit sur la dénaturation du produit brut, de sorte qu'il est possible de séparer puis d'isoler certains constituants présents dans le matériau brut, mais indésirables pour le produit transformé.

Selon l'invention, c'est l'effet lixiviant de ce procédé connu qui est exploité et optimisé pour assurer un prétraitement efficace des déchets bois pollué.

Ce procédé a été optimisé dans le but de réduire, voire faire disparaître des polluants ou poisons non présents à l'état naturel du bois (c'est-à-dire des composés exogènes), afin de permettre une utilisation de la matière densifiée obtenue dans des installations de combustion, et ce sans faire usage de traitements de dépollution complexes.

Les pellets ou briquettes obtenues selon le procédé de l'invention, également appelées en anglais « pellets » de bois densifié ou « black pellets » peuvent être retenues comme combustible de substitution du charbon.

Ces « pellets » résistent à l'eau et peuvent être stockés à l'extérieur sans installations de stockage coûteuses. Du fait de leurs propriétés physiques similaires à celles du charbon, les équipements de combustion connus ainsi que les techniques en aval conçues pour une utilisation avec du charbon s'adaptent facilement pour une utilisation de ces pellets et briquettes, ce qui minimise le coût de la conversion des centrales au charbon existantes.

Selon l'invention, on fait usage de fragments de bois comportant au moins un polluant exogène, ce qui les fait appartenir à la catégorie de bois-déchet de Classe B ou de catégorie 3, comme expliqué plus haut.

Ainsi qu'on le verra en détail dans la suite de la description, le présent procédé répond à deux principales contraintes en :

- Réduisant, voire supprimant en concentration, par un effet de lixiviation, les polluants initialement présents dans le bois ;

- Concentrant le taux de lignine (chaîne la plus carbonée) du bois en limitant au maximum la perte de matière, et limitant la présence d'eau contenue dans la matière,

Ces deux effets combinés permettent, au final, de produire un combustible qui, du fait de sa composition finale, se rapproche des caractéristiques physico-chimiques de la biomasse, mais qui est aussi parfaitement compatible avec les installations qui en font usage, et ceci avec un pouvoir calorifique supérieur à celui du bois brut naturel.

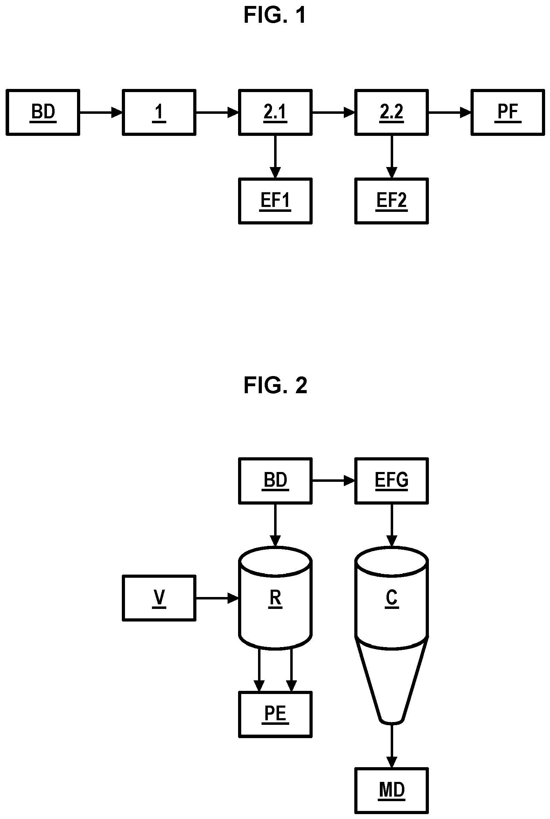

Le procédé selon l'invention peut avantageusement être mis en oeuvre selon le processus général suivant, décrit ci-après, en relation avec la figure 1 annexée.

Une première étape qu'il est avantageux de mettre en oeuvre (bloc 1 de la figure 1) consiste en la préparation de la matière première BD, résidant notamment en un broyage et en une homogénéisation de la matière entrante. Cette matière brute entrante est broyée préférentiellement selon une granulométrie comprise entre 0.1 mm et 50 mm afin d'obtenir une certaine homogénéité du produit entrant et assurer une pénétration uniforme de la vapeur dans le bois. Toutefois, une granulométrie autre que celle indiquée peut être envisagée.

L'étape suivante réside dans le traitement de la matière via le procédé précité de Vapeur Explosion qui comporte les deux séquences principales suivantes :
Une première séquence, dite de traitement thermique de la matière, ou vapocraquage (bloc 2.1 de la figure 1), consiste à faire pénétrer la vapeur sous haute pression par diffusion à l'intérieur de la structure du matériau.

Ainsi, la vapeur se condense et humidifie le matériau. L'eau condensée, couplée à une température élevée, initie l'hydrolyse des groupements acétyles et éthylglucuroniques contenus dans les xylans et dans certaines fractions galactomannanes du bois. Plusieurs études indiquent que l'hydrolyse de la fraction hémicellulosique est corrélée au temps de séjour de la biomasse dans le réacteur. Les acides organiques (acides acétiques et uroniques) ainsi libérés contribuent à augmenter l'acidité du milieu et catalysent la dépolymérisation des fractions hémicellulosiques, ce qui entraine la libération de xylans et d'une quantité limitée de glucanes. Ces produits d'hydrolyse peuvent générer des produits tel que du furfural, de l'hydroxymethylfurfural, des acides lévulinique et formique ainsi que divers composés aromatiques.

Des paramètres de de cette séquence, qui peuvent agir sur les réactions chimiques, sont la température de la vapeur et sa durée de mise en oeuvre. Selon un mode de réalisation de l'invention, la température de la vapeur est comprise entre 200 et 300 °C.

Plus le temps de séjour est grand, plus l'hydrolyse de la fraction hémicellulosique est élevée. Un indicateur appelé sévérité, qui est fonction de cette température et de la durée, est représentatif du traitement appliqué.

Par sévérité, on entend le paramètre physique obtenu par la formule suivante :

$$S = Log_{10} \int_0^t e^{\left[\frac{Tr-Tb}{14,75}\right]} . dt$$

Dans laquelle :

S = Facteur de sévérité ;

Tr = Température du de la vapeur (°C) ;

Tb = Température d'ébullition de l'eau à pression atmosphérique (°C) ;

t = Temps de rétention (minutes) ;

14,75 = Valeur d'énergie d'activation dans les conditions où la cinétique du procédé est d'ordre 1 et obéit à la loi d'Arrhenius.

Une même sévérité peut avoir des effets différents selon la nature du matériau traité. Avantageusement et selon l'invention, la valeur optimale de S semble se situer en dessous de 4,5. Il semble qu'au-dessus de cette valeur, la perte de matière ainsi que la production de gaz nocifs soient trop importantes.

Les effluents (EF1) générés lors de cette étape sont principalement constitués d'eau et d'autres composés tels que des métaux, ainsi que des composés d'oxydations sous forme de gaz et/ou de particules.

Une deuxième séquence, que l'on peut qualifier de traitement mécanique ou d'explosion de la matière, consiste en une décompression explosive provoquée par une chute brutale de pression (bloc 2.2). Avantageusement, cette chute à une pression inférieure est mise en oeuvre selon au moins un gradient de pression supérieur à 10 bar, ce qui entraine la « revaporisation » d'une partie de l'eau de condensation présente dans le matériau.

Cette expansion brutale de la vapeur d'eau induit l'apparition de forces de cisaillement qui s'appliquent à l'ensemble du matériau. Ces forces sont suffisantes pour provoquer l'éclatement mécanique de la structure des fragments de bois.

Les effluents générés (EF2) lors de cette phase sont constitués d'eau et de composés tels que des métaux et des composés d'oxydations sous forme de gaz et/ou de particules.

A la fin de ladite phase, une séparation cyclonique permet de récupérer du bois densifié PF.

On entend par séparation cyclonique la mise en rotation du mélange afin de séparer la partie gazeuse (EF2) de la partie solide (MD).

Comme montré à la figure 2 dans laquelle les références alphabétiques et numériques ont la même signification que celles de la figure 1, l'installation de Vapeur Explosion utilisé dans le cadre du présent procédé est composée :
D'au moins un réacteur R, siège de la transformation thermique à l'aide de vapeur v, équipé d'évents et d'une purge des condensats PE,

D'un cyclone C, siège de la transformation mécanique et permettant de récupérer par effet cyclonique, la matière torréfiée dépolluée MD et les effluents gazeux EFG.

Les polluants contenus initialement dans la matière brute sont retrouvés en majeure partie dans les effluents liquides et gazeux générés au niveau du réacteur R et du cyclone C, sous leurs formes initiales ou transformés. Ces effluents sont collectés puis traités.

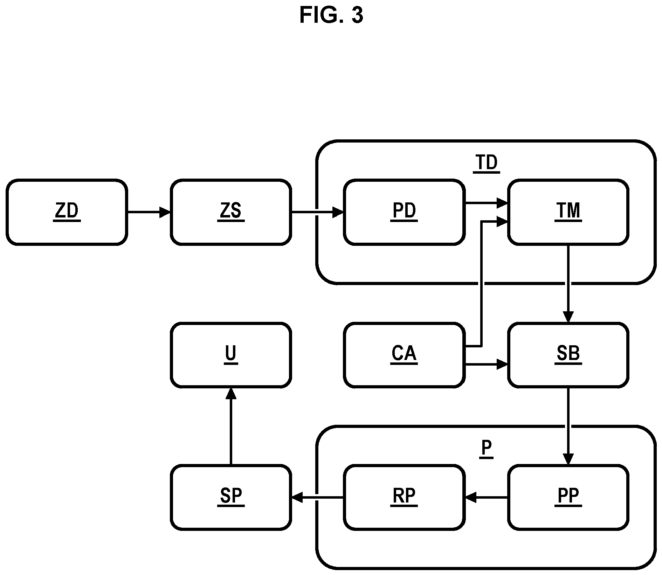

Le procédé selon l'invention est mis en oeuvre au sein d'un processus plus global qui est schématisé à la figure 3. Sur cette figure, les sigles utilisés ont la signification suivante :

ZD : zone de déchargement du bois-déchet ;

ZS : zone de stockage du bois-déchet ;

TD : traitement de densification par vapeur explosion ;

PD : préparation de la densification, notamment par déferraillage, épierrage et broyage ;

TM : traitement de la matière ;

CA : chaudière de production de vapeur ;

SB : séchage de la matière traitée, par exemple à l'aide d'un sécheur à bande ;

P : « pelletisation », c'est-à-dire fabrication de pellets ou de briquettes, comprenant une préparation PP et la réalisation RP de cette fabrication ;

SP : stockage des pellets ou des briquettes ;

U : utilisation des pellets ou des briquettes, par exemple pour une alimenter une centrale, en vue de la production d'électricité ou de vapeur.

Le présent demandeur a procédé à de nombreux essais de mise en oeuvre du procédé selon l'invention, en faisant usage de bois-déchets d'origines variées, selon des granulométries différentes, avec des durées variables de vapeur explosion.

Il est apparu de ces essais que l'on a intérêt à adapter la durée du traitement de vapocraquage en fonction de la nature des polluants majoritaires contenus dans le bois-déchet, de manière à obtenir la plus forte réduction de la teneur de ce polluant après traitement, en faisant usage de la quantité minimale d'énergie.

La nature des polluants majoritaires résulte de l'analyse des composés du bois-déchet et varie en fonction de l'origine du bois-déchet en lien avec le traitement qu'il a subi avant de devenir un déchet.

Une base de données a été établie sur la constitution chimique des différents bois-déchets collectés auprès de centres de tris. Ainsi, une fois connu le besoin en approvisionnement de bois-déchet destiné à la fabrication des pellets, cet approvisionnement étant issu des centres de tris, on détermine grâce à la bases de données précitée la composition chimique du bois-déchet qui sera utilisé, pour permettre de fixer les paramètres optimaux de traitement dans l'installation selon l'invention.

Dans l'ensemble de la présente demande, quand on exprime le fait que le polluant majoritaire est le composé « X », on entend que la concentration totale de ce polluant est la plus prépondérante. Ainsi, par exemple, quand on indique que le polluant majoritaire est N (azote), on entend que l'on comptabilise la totalité des molécules d'azote contenues dans les différentes chaînes d'atomes (on parle alors de N global ou total).

De cette manière et à titre d'exemple, les durées de traitement suivantes ont pu être déterminées (polluant majoritaire à base de /durée de traitement) :

N/ 5 minutes ;

S / 5 minutes ;

Cl / 15 minutes ;

PCB 28 / 5 minutes ;

PCB 52 / 5 minutes.

On entend par PCB les polychlorobiphényles, le nombre qui suit ce sigle indiquant le PCB concerné (ce numéro étant compris entre 1 et 209, selon la nomenclature IUPAC).

Ainsi, le PCB28 est le 2,4,4 - trichlorobiphényle, tandis que le PCB52 est le 2,2',5,5' - tetrachorobiphénile.

Les différents essais réalisés sur un échantillon large de bois déchet ont permis d'établir le traitement optimal à mettre en oeuvre, en vue d'obtenir un produit final suffisamment dépollué, compte tenu du spectre des teneurs des polluants initiaux et de l'objectif de dépollution.

## Revendications

**1.** Procédé de fabrication de pellets ou de briquettes de combustible à partir de bois, selon lequel :

- on soumet des fragments de ce bois à un premier traitement dans une enceinte, par injection de vapeur comprise entre 200 et 300 °C et montée en pression jusqu'à 10 à 30 bar,
- puis à un second traitement de décompression explosive par baisse brutale de ladite pression de manière à provoquer l'éclatement desdits fragments ;
- on récupère lesdits fragments et on transforme ceux-ci en pellets ou briquettes, après une étape de séchage préalable,

**caractérisé en ce que** lesdits fragments de bois sont des fragments de bois comportant au moins un polluant exogène, que l'on détermine la nature et la proportion dudit au moins un polluant avant la mise en oeuvre de ledit premier traitement et que l'on adapte la durée de ce premier traitement en fonction de la nature du polluant majoritaire.

**2.** Procédé selon la revendication 1, **caractérisé par le fait qu'**il est mis en oeuvre avec un facteur de sévérité S inférieur à 4,5,

$$S = Log_{10} \int_0^t e^{\left[\frac{Tr-Tb}{14,75}\right]} . dt$$

Avec
où

Tr= Température mise en oeuvre (°C) ;
Tb= Température d'ébullition de l'eau à pression atmosphérique (°C) ;
t = Temps de rétention (minutes) ;
14,75= Valeur d'énergie d'activation dans les conditions où la cinétique du procédé est d'ordre 1 et obéit à la loi d'Arrhenius.

**3.** Procédé selon la revendication 1, **caractérisé par le fait que** la granulométrie des fragments de bois est comprise entre 0,1 et 50 millimètres.

**4.** Procédé selon la revendication 1 ou 2, **caractérisé par le fait que** la baisse brutale de pression est opérée en une durée inférieure à 10 secondes.

**5.** Procédé selon la revendication 3, **caractérisé par le fait que** la baisse brutale de pression est opérée selon une amplitude d'au moins 10 bar.

**6.** Procédé selon l'une des revendications précédentes, **caractérisé par le fait que** lorsque le polluant majoritaire est à base de polychlorobiphényles (PCB), alors la durée du premier traitement est de 5 minutes.

**7.** Procédé selon l'une des revendications 1 à 5, **caractérisé par le fait que** lorsque le polluant majoritaire est à base d'azote, alors la durée du premier traitement est de 5 minutes.

**8.** Procédé selon l'une des revendications 1 à 5, **caractérisé par le fait que** lorsque le polluant majoritaire est à base de soufre, alors la durée du premier traitement est de 5 minutes.

**9.** Procédé selon l'une des revendications 1 à 5, **caractérisé par le fait que** lorsque le polluant majoritaire est à base de chlore, alors la durée du premier traitement est de 15 minutes.

**10.** Procédé selon l'une des revendications précédentes, **caractérisé par le fait que** l'on collecte les effluents liquides et gazeux (EF1/EF2) qui ont été générés en vue de leur traitement.

**Patentansprüche**

1. Verfahren zur Herstellung von Pellets oder von Brennstoffbriketts aus Holz, wobei:

   - Fragmente dieses Holzes einer ersten Behandlung in einem Behälter durch Einleiten von Dampf zwischen 200 und 300 °C und Druckbeaufschlagung bis auf 10 bis 30 bar unterzogen werden,
   - dann einer zweiten Explosivdekompressionsbehandlung durch plötzliche Druckminderung derart, dass die Fragmente platzen;
   - die Fragmente zurückgewonnen werden und nach einem vorherigen Trocknungsschritt in Pellets oder Briketts umgewandelt werden,

   **dadurch gekennzeichnet, dass** die Holzfragmente Holzfragmente sind, die mindestens einen exogenen Schadstoff aufweisen, dass die Art und der Anteil des mindestens einen Schadstoffs vor der Durchführung der ersten Behandlung bestimmt wird und dass die Dauer dieser ersten Behandlung in Abhängigkeit von der Art des mehrheitlichen Schadstoffs angepasst wird.

2. Verfahren nach Anspruch 1, **dadurch gekennzeichnet, dass** es mit einem Risikofaktor S unter 4,5 durchgeführt wird,

$$S = Log_{10} \int_0^t e^{\left[\frac{Tr-Tb}{14,75}\right]} . dt$$

   mit
   wobei

   Tr = Durchführungstemperatur (°C);
   Tb = Siedetemperatur des Wassers bei atmosphärischem Druck (°C);
   t = Rückhaltezeit (Minuten);
   14,75 = Energieaktivierungswert unter Bedingungen, in denen die Kinetik des Verfahrens zirka 1 beträgt und der Arrhenius-Gleichung folgt.

3. Verfahren nach Anspruch 1, **dadurch gekennzeichnet, dass** die Granulometrie der Holzfragmente zwischen 0,1 und 50 Millimeter beträgt.

4. Verfahren nach Anspruch 1 oder 2, **dadurch gekennzeichnet, dass** die plötzliche Druckminderung innerhalb eines Zeitraums von weniger als 10 Sekunden erfolgt.

5. Verfahren nach Anspruch 3, **dadurch gekennzeichnet, dass** die plötzliche Druckminderung gemäß einer Amplitude von mindestens 10 bar durchgeführt wird.

6. Verfahren nach einem der vorangehenden Ansprüche, **dadurch gekennzeichnet, dass**, wenn der mehrheitliche Schadstoff auf der Basis von Polychlorbiphenylen (PCB) ist, dann die Dauer der ersten Behandlung 5 Minuten beträgt.

7. Verfahren nach einem der Ansprüche 1 bis 5, **dadurch gekennzeichnet, dass**, wenn der mehrheitliche Schadstoff auf der Basis von Stickstoff ist, dann die Dauer der ersten Behandlung 5 Minuten beträgt.

8. Verfahren nach einem der Ansprüche 1 bis 5, **dadurch gekennzeichnet, dass**, wenn der mehrheitliche Schadstoff auf der Basis von Schwefel ist, dann die Dauer der ersten Behandlung 5 Minuten beträgt.

9. Verfahren nach einem der Ansprüche 1 bis 5, **dadurch gekennzeichnet, dass**, wenn der mehrheitliche Schadstoff auf der Basis von Chlor ist, dann die Dauer der ersten Behandlung 15 Minuten beträgt.

10. Verfahren nach einem der vorangehenden Ansprüche, **dadurch gekennzeichnet, dass** die erzeugten flüssigen und gasförmigen Ableitungen (EF1/EF2) im Hinblick auf deren Behandlung gesammelt werden.

**Claims**

1. A method of manufacturing fuel pellets or briquettes from wood, wherein:

   - fragments of this wood are subjected to a first treatment in an enclosure, by injecting steam between 200 and 300 °C and increasing the pressure to 10 to 30 bar,
   - then to a second treatment of explosive decompression by sudden decrease of the said pressure so as to cause the bursting of the said fragments;
   - said fragments are recovered and transformed into pellets or briquettes, after a prior drying step,

   **characterized in that** said wood fragments are wood fragments comprising at least one exogenous pollutant , **in that** the nature and the proportion of said at least one pollutant are determined before the implementation of said first treatment and **in that** the duration of this first treatment is adapted as a function of the nature of the major pollutant.

2.  A method according to claim 1, **characterized by** the fact that it is implemented with a severity factor S lower than 4.5,

$$S = Log_{10} \int_{0}^{t} e^{\left[\frac{Tr-Tb}{14,75}\right]} . dt$$

where

> Tr= Temperature used (°C);
> Tb= Boiling temperature of water at atmospheric pressure (°C);
> t = Retention time (minutes);
> 14.75= Activation energy value under conditions where the process kinetics is of order 1 and obeys Arrhenius law.

3.  The process according to claim 1, **characterized by** the fact that the particle size of the wood fragments is between 0.1 and 50 millimeters.

4.  A method according to claim 1 or 2, **characterized by** the fact that the sudden drop in pressure is carried out in less than 10 seconds.

5.  The method of claim 3, **characterized in that** the sudden pressure drop is carried out with an amplitude of at least 10 bar.

6.  The method according to any of the preceding claims, **characterized by** the fact that when the majority pollutant is based on polychlorinated biphenyls (PCB), then the duration of the first treatment is 5 minutes.

7.  The process according to any of claims 1 to 5, **characterized by** the fact that when the majority pollutant is nitrogen-based, then the duration of the first treatment is 5 minutes.

8.  The process according to any one of claims 1 to 5, **characterized in that** when the majority pollutant is sulfur-based, then the duration of the first treatment is 5 minutes.

9.  The process according to any of claims 1 to 5, **characterized in that** when the majority pollutant is chlorine-based, then the duration of the first treatment is 15 minutes.

10. Process according to one of the preceding claims, **characterized by** the fact that the liquid and gaseous effluents (EF1/EF2) that have been generated are collected for treatment.

**FIG. 1**

**FIG. 2**

# FIG. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3087790

**Littérature non-brevet citée dans la description**

- **PETER BJORKLUND et al.** Steam exploded pellets for heat and power generation. *VGB POWERTECN,* vol. 96 (4

- **ALIREZA KHARAZIPOUR et al.** *Recycling ofWood Composites and Solid Wood Products*